# EUROPÄISCHE PATENTSCHRIFT

(11) **EP 3 619 803 B1**
(45) Veröffentlichungstag und Bekanntmachung des Hinweises auf die Patenterteilung: **11.08.2021**
(21) Anmeldenummer: 18726336.3
(22) Anmeldetag: 25.04.2018
(51) Int. Cl.: H02M 1/32, H02P 29/68, H02M 7/5387

(54) **VERFAHREN ZUR ANSTEUERUNG EINES STROMRICHTERS, STEUERVORRICHTUNG FÜR EINEN STROMRICHTER UND STROMRICHTER**
METHOD FOR CONTROLLING A POWER CONVERTER, CONTROL DEVICE FOR A POWER CONVERTER AND POWER CONVERTER
PROCÉDÉ DE COMMANDE D'UN CONVERTISSEUR DE PUISSANCE, DISPOSITIF DE COMMANDE D'UN CONVERTISSEUR DE PUISSANCE ET CONVERTISSEUR DE PUISSANCE

(30) Priorität: 02.05.2017 DE 102017207301
(43) Veröffentlichungstag der Anmeldung: 11.03.2020
(73) Patentinhaber: Robert Bosch GmbH, 70442 Stuttgart (DE)
(72) Erfinder: MERKEL, Tino, 71701 Schwieberdingen (DE); MALCHOW, Florian, 70176 Stuttgart (DE); HIRSCH, Michele, 73730 Esslingen (DE)
(86) Internationale Anmeldenummer: PCT/EP2018/060615
(87) Internationale Veröffentlichungsnummer: WO 2018/202513

(56) Entgegenhaltungen:
- EP-A1- 2 916 443
- US-A1- 2002 131 285
- US-A1- 2016 373 047

## Beschreibung

Die vorliegende Erfindung betrifft ein Verfahren zur Ansteuerung eines Stromrichters, eine Steuervorrichtung für einen Stromrichter und einen Stromrichter. Insbesondere betrifft die vorliegende Erfindung die Ansteuerung eines Stromrichters zur Optimierung einer Temperaturverteilung in dem Stromrichter.

### Stand der Technik

Die Druckschrift DE 10 2007 018 829 A1 offenbart ein Verfahren und eine Vorrichtung zur Ansteuerung einer Leistungsschaltereinheit. Zum Schutz der Leistungsschaltereinheit gegen thermische Überbelastung wird eine Temperaturrichtgröße der Leistungsschaltereinheit erhoben, anhand des zeitlichen Verlaufs der Temperaturrichtgröße wird ein Temperaturhub während einer Betriebsphase der Leistungsschaltereinheit bestimmt und anschließend die Verlustleistung der Leistungsschaltereinheit derart limitiert, dass der Temperaturhub einen vorgegebenen Grenzwert nicht überschreitet.

Die Druckschrifte EP2395650 und EP 2 916 443 A1 offenbaren einen Inverter mit einem Stromregler, der eine PWM-Modulation für eine erste und eine zweite Phase ermittelt und ausgibt. Hierbei werden unterschiedliche Schaltzeiten für die einzelnen Schalter des Inverters ermittelt und angesteuert.

In elektrischen Antriebssystemen wird in der Regel eine elektrische Maschine von einem vorgeschalteten Stromrichter mit elektrischer Energie gespeist. Derartige Stromrichter umfassen mehrere Halbleiterschaltelemente mittels derer ein elektrischer Strom und/oder eine elektrische Spannung für die angeschlossene elektrische Maschine eingestellt werden kann. Hierbei werden die Schaltelemente beispielsweise mittels eines Pulsbreitenmodulationsverfahrens angesteuert. Übliche Modulationsverfahren sind beispielsweise Raumzeiger-Modulation, Sinusmodulation, Flat-Top oder Flat-Bottom. In der Regel werden dabei in einem Normalbetrieb alle Schaltelemente gleichmäßig angesteuert. Während des Betriebs ist dabei darauf zu achten, dass vorgegebene Grenzwerte für die Belastung der Schaltelemente, wie zum Beispiel eine maximale Temperatur oder ähnliches nicht überschritten werden.

### Offenbarung der Erfindung

Die vorliegende Erfindung offenbart ein Verfahren zur Ansteuerung eines Stromrichters mit den Merkmalen des Patentanspruchs 1, eine Steuervorrichtung für einen Stromrichter mit den Merkmalen des Patentanspruchs 6 und einen Stromrichter mit den Merkmalen des Patentanspruchs 9.

### Demgemäß ist vorgesehen:

Ein Verfahren zur Ansteuerung eines mehrphasigen Stromrichters. Das Verfahren umfasst einen Schritt zum Ermitteln einer Temperaturverteilung in dem Stromrichter. Weiterhin umfasst das Verfahren einen Schritt zum Einstellen von vorbestimmten Phasenströmen in dem Stromrichter. Die vorbestimmten Phasenströme in dem Stromrichter werden dabei in Abhängigkeit von der ermittelten Temperaturverteilung in dem Stromrichter eingestellt. Dabei wird für jede Phase des Stromrichters ein individueller Phasenstrom eingestellt.

### Weiterhin ist vorgesehen:

Eine Steuervorrichtung für einen mehrphasigen Stromrichter. Die Steuervorrichtung umfasst eine Auswerteeinrichtung und eine Steuereinrichtung. Die Auswerteeinrichtung ist dazu ausgelegt, eine Temperaturverteilung in dem Stromrichter zu ermitteln. Die Steuervorrichtung ist dazu ausgelegt in Abhängigkeit von der ermittelten Temperaturverteilung in dem Stromrichter vorgebestimmte Phasenströme für den Stromrichter zu berechnen. Weiterhin ist die Steuereinrichtung dazu ausgelegt, an dem Stromrichter eine Steuergröße zum Einstellen der berechneten Phasenströme bereitzustellen. Die Steuervorrichtung ist insbesondere dazu ausgelegt, für jede Phase des Stromrichters einen individuellen Phasenstrom zu berechnen. Entsprechend kann an dem Stromrichter eine Steuergröße bereitgestellt werden, die es ermöglicht, an dem Stromrichter individuell für jede Phase einen Phasenstrom einzustellen.

### Ferner ist vorgesehen:

Ein Stromrichter mit mehreren Halbbrücken und einer erfindungsgemäßen Steuervorrichtung. Jede der Halbbrücken des Stromrichters umfasst ein oberes Schaltelement und ein unteres Schaltelement. Die Halbbrücken sind hierbei dazu ausgelegt, jeweils vorgegebene Phasenströme auszugeben.

### Vorteile der Erfindung

Der vorliegenden Erfindung liegt die Erkenntnis zugrunde, dass für die Bauelemente eines Stromrichters, insbesondere für die dabei eingesetzten Schaltelemente jeweils Grenzwerte existieren, die während des Betriebs nicht überschritten werden dürfen. Diese Grenzwerte umfassen insbesondere auch eine maximale Betriebstemperatur oder einen maximal zulässigen Anstieg der Betriebstemperatur. Hierbei kann zum Beispiel ein absoluter oder relativer Anstieg der der Betriebstemperatur ausgewertet werden. Ferner kann als Grenzwert auch eine Temperaturdifferenz, beispielsweise eine Temperaturdifferenz zwischen einem Bauelement (z.B. einem Schaltelement) des Stromrichters und einem benachbarten Bauelement, wie zum Beispiel einer Kühleinrichtung oder einem Kühlmedium ausgewertet werden, wobei die Temperaturdifferenz möglichst einen vorgegebene Grenzwert nicht überschreiten sollte. Wird die maximale Betriebstemperatur oder Temperaturdifferenz dennoch überschritten, so besteht die Gefahr, dass die entsprechenden Bauteile beschädigt oder zerstört werden, oder zumindest eine vorzeitige Alterung auftritt. Wird an einem der Schaltelemente des Stromrichters eine Temperatur erreicht, welche im Bereich der maximalen Betriebstemperatur liegt, oder diese gegebenenfalls sogar überschreitet, so muss in der Regel die Leistung des Stromrichters reduziert werden, um eine Zerstörung oder vorzeitige Alterung zu vermeiden. Dabei kann es aufgrund des Aufbaus des Stromrichters und des angeschlossenen Kühlsystems gegebenenfalls zu einer sehr unterschiedlichen Erwärmung in den einzelnen Schaltelementen kommen. Zum Schutz der Schaltelemente und des gesamten Stromrichters muss dabei die Leistung des Stromrichters bereits dann reduziert werden, wenn mindestens eines der Schaltelemente die vorgegebene maximale Betriebstemperatur erreicht oder gegebenenfalls überschreitet.

Es ist daher eine Idee der vorliegenden Erfindung, dieser Erkenntnis Rechnung zu tragen und eine Ansteuerung für einen Stromrichter zu schaffen, bei welchem eine Temperaturentwicklung in den einzelnen Komponenten, insbesondere den Schaltelementen des Stromrichters angeglichen werden kann. Auf diese Weise kann einer ungleichmäßigen Temperaturverteilung der Schaltelemente in dem Stromrichter entgegengewirkt werden. Beispielsweise kann durch eine geeignete Ansteuerung der einzelnen Schaltelemente einem lokalen Temperaturanstieg an einem oder mehreren Schaltelementen entgegengewirkt werden. Auf diese Weise kann der Stromrichter über einen weiteren Bereich hinweg mit der maximalen Leistung betrieben werden. Darüber hinaus kann auch einer vorzeitigen Alterung eines oder mehrerer Schaltelemente dadurch Rechnung getragen werden, dass ein eventuell stärker beanspruchtes oder bereits vorzeitig gealtertes Schaltelement in einem schonenderen Betriebsmodus, beispielsweise mit einer niedrigeren Betriebstemperatur, betrieben wird.

Gemäß einer Ausführungsform des Verfahrens zur Ansteuerung des Stromrichters umfasst das Einstellen der vorbestimmten Phasenströme in dem Stromrichter ein Überlagern einer Grundfrequenz der Phasenströme mit mindestens einer weiteren harmonischen Oberschwingung. Auf diese Weise kann eine besonders einfache und effiziente Anpassung der einzelnen Phasenströme erreicht werden. Insbesondere können je nach Phasenlage der Oberschwingungen die Amplituden einzelnen Phasenströme gegenüber den anderen Phasenströmen sehr leicht angehoben oder abgesenkt werden.

Gemäß einer Ausführungsform umfasst die mindestens eine weitere harmonische Oberschwingung des Phasenstroms mindestens die zweite harmonische Oberschwingung der Grundfrequenz. Ferner kann die mindestens eine weitere harmonische Oberschwingung auch beispielsweise die sechste harmonische Oberschwingung der Grundfrequenz des Phasenstroms in einem d-q-System umfassen. Die genannten Oberschwingungen betreffen insbesondere die Oberschwingungen in einem rotorfesten Koordinatensystem, dem d-q-System. Gegebenenfalls können bei einer statorfesten Regelung die gleichen oder eventuell auch hiervon abweichende Oberschwingungen überlagert werden. Hierdurch kann eine sehr gute Formung der Phasenströme erzielt werden. In einem statorfesten System (u-v-w-System) verschieben sich gemäß der Parktransformation die Oberschwingungen auf die entsprechenden Seitenbänder.

Gemäß einer Ausführungsform umfasst das Einstellen von vorbestimmten Phasenströmen in dem Stromrichter ein Anpassen der Phasenströme mit einer vorbestimmten Zeitkonstante. Durch das Anpassen der Phasenströme mit einer vorbestimmten Zeitkonstante wird ein sprungartiger Wechsel der Phasenströme vermieden. Die Phasenströme werden somit allmählich variiert. Hierdurch ist für einen außenstehenden Benutzer keine sprunghafte Veränderung erfahrbar, die den Benutzer gegebenenfalls irritieren könnte.

Gemäß einer Ausführungsform umfasst das Einstellen der vorbestimmten Phasenströme in dem Stromrichter ein Überlagern der Phasenströme mit einem vorgegebenen Offset. Auf diese Weise ist es beispielsweise möglich, die oberen Schaltelemente bzw. die unteren Schaltelemente in den Halbbrücken des Stromrichters unterschiedlich stark zu beanspruchen und somit gegebenenfalls einer unterschiedlich starken Erwärmung der oberen Schaltelemente und der unteren Schaltelemente entgegenzuwirken.

Gemäß einer Ausführungsform der Steuervorrichtung für den Stromrichter ist die Auswerteeinrichtung dazu ausgelegt, die Temperaturverteilung in dem Stromrichter in Abhängigkeit von mindestens einem sensorisch erfassten Temperaturwert zu ermitteln. Hierzu kann die Steuervorrichtung des Stromrichters einen oder mehrere Temperatursensoren umfassen, welche eine Temperatur in dem Stromrichter erfassen und einen entsprechenden Sensorwert bereitstellen.

Gemäß einer Ausführungsform ist die Auswerteeinrichtung dazu ausgelegt, die Temperaturverteilung in dem Stromrichter auf Grundlage eines Rechenmodells zu ermitteln. Diesem Rechenmodell können beispielsweise die aktuellen berechneten oder sensorisch erfassten Stromwerte in den Phasenanschlüssen des Stromrichters zugrunde liegen. Ferner kann das Rechenmodell auch eine oder mehrere sensorisch erfasste Temperaturen berücksichtigen und hieraus eine Temperaturverteilung in dem Stromrichter ermitteln. Darüber hinaus kann das Rechenmodell auch beliebige weitere Parameter, wie beispielsweise eine Kühlleistung des Stromrichters oder ähnliches mit berücksichtigen.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen und Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines elektrischen Antriebssystems mit einem Stromrichter gemäß einer Ausführungsform;
- Figur 2:: zeigt eine schematische Darstellung der Phasenströme eines dreiphasigen Stromrichters mit Phasenströmen gleicher Amplitude;
- Figur 3:: eine schematische Darstellung von ungleichen Phasenströmen, wie sie gemäß einem Verfahren zur Ansteuerung des Stromrichters in einer Ausführungsform resultieren; und
- Figur 4:: eine schematische Darstellung eines Ablaufdiagramms, wie es einem Verfahren zur Ansteuerung eines mehrphasigen Stromrichters gemäß einer Ausführungsform zugrunde liegt.

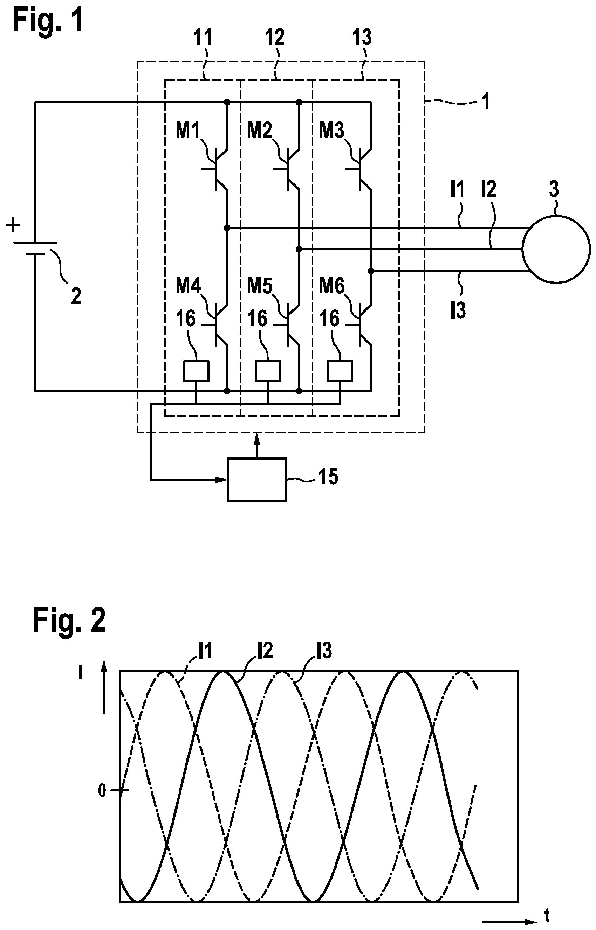

Figur 1 zeigt eine schematische Darstellung eines elektrischen Antriebssystems mit einem Stromrichter 1 gemäß einer Ausführungsform. Der Stromrichter 1 wird eingangsseitig von einer elektrischen Energiequelle 2 gespeist. Beispielsweise kann es sich bei dieser elektrischen Energiequelle 2 um eine Batterie, insbesondere zum Beispiel um die Traktionsbatterie eines Elektro- oder Hybridfahrzeugs handeln. Ausgangsseitig ist der Stromrichter 1 mit einer elektrischen Maschine 3 elektrisch gekoppelt. Der Stromrichter 1 generiert aus der eingangsseitig bereitgestellten Spannung, hier beispielsweise einer Gleichspannung, eine mehrphasige Wechselspannung und stellt diese ausgangsseitig für die elektrische Maschine 3 bereit. Mit dem hier dargestellten Ausführungsbeispiel sowie der weiteren Beschreibung wird die elektrische Maschine 3 mittels einer dreiphasigen Wechselspannung angesteuert. Die vorliegende Erfindung ist jedoch nicht auf eine dreiphasige Wechselspannung begrenzt. Darüber hinaus kann der Stromrichter 1 auch eine beliebige mehrphasige Wechselspannung insbesondere eine Wechselspannung mit mehr als drei Phasen bereitstellen, um die elektrische Maschine 3 anzusteuern.

Der Stromrichter 1 umfasst in diesem Beispiel drei Halbbrücken 11, 12, 13 mit jeweils einem oberen Schaltelement M1 bis M3 und jeweils einem unteren Schaltelement M4 bis M6. Die Schaltelemente M1 bis M6 des Stromrichters 1 werden dabei von einer Steuereinrichtung 15 mittels geeigneter Steuersignale angesteuert, um aus einer Eingangsspannung die erforderliche mehrphasige Ausgangsspannung zu erzeugen. Hierzu können die einzelnen Schaltelemente M1 bis M6 der Halbbrücken 11, 12, 13 beispielsweise von der Steuereinrichtung 15 mittels pulsbreitenmodulierten Signalen angesteuert werden. In einem konventionellen Betriebsmodus werden die einzelnen Schaltelemente M1 bis M6 der Halbbrücken 11, 12, 13 dabei in der Regel gleichmäßig angesteuert, so dass ausgangsseitig eine dreiphasige Wechselspannung bereitgestellt wird, wobei die Amplituden in allen Phasen, und somit auch die resultierenden Phasenströme I1 bis I3 gleich hoch sind.

Während des Betriebs des Stromrichters 1 werden sich die einzelnen Komponenten, insbesondere die Schaltelemente M1 bis M6 erwärmen. Um die dabei entstehende Wärme abzuführen, kann der Stromrichter 1 beispielsweise über eine Kühlvorrichtung (hier nicht dargestellt) die thermische Energie von den Schaltelementen M1 bis M6 abführen. Hierzu kann beispielsweise als Kühlmedium Luft oder eine Kühlflüssigkeit eingesetzt werden. Während das Kühlmedium an den einzelnen Schaltelementen M1 bis M6 vorbeiströmt, erwärmt sich das Kühlmedium. Strömt das Kühlmedium beispielsweise zunächst an den Schaltelementen M1 und M4 der ersten Halbbrücke 11 vorbei und anschließend an den Schaltelementen M2 und M5 der zweiten Halbbrücke sowie schließlich an den Schaltelementen M3 und M6 der dritten Halbbrücke, so kann dies dazu führen, dass die Schaltelemente M1 und M4 der ersten Halbbrücke 11 stärker gekühlt werden als die weiteren Schaltelemente M2, M3, M5 und M6. Dies kann dazu führen, dass sich die weniger stark gekühlten Schaltelemente, insbesondere die Schaltelemente M3 und M6 der dritten Halbbrücke 13 stärker erwärmen.

Figur 2 zeigt eine schematische Darstellung eines Strom-Zeitdiagramms der Phasenströme I1, I2, I3 in den Phasen zwischen dem Stromrichter 1 und der elektrischen Maschine 3 bei einer gleichmäßigen Ansteuerung der drei Halbbrücken 11, 12 und 13. Wie hierbei zu erkennen ist, weisen alle drei Phasenströme I1, I2 und I3 eine gleiche Amplitude auf. Bei einer Transformation in ein d-q-System entspricht dies einem konstanten Strom Iq und Id.

Wird während des Betriebs des Stromrichters 1 festgestellt, dass sich beispielsweise die Schaltelemente einer Halbbrücke 11, 12 oder 13 stärker erwärmen, als die übrigen Schaltelemente und dabei insbesondere die Temperatur dieser Schaltelemente gegebenenfalls sich einer maximal zulässigen Betriebstemperatur annähern, so kann daraufhin die Ansteuerung der Schaltelemente M1 bis M6 in den Halbbrücken 11, 12, 13 angepasst werden, um dieser ungleichen Temperaturverteilung entgegenzuwirken. Beispielsweise kann hierzu ein elektrischer Strom, der durch die Halbbrücke mit der höchsten Temperatur bereitgestellt wird, im Vergleich zu den Phasenströmen der übrigen Halbbrücken abgesenkt werden. Entsprechend kann beispielsweise ein elektrischer Strom in einer Halbbrücke 11, 12, 13, welche die geringste Temperatur aufweist, im Verhältnis zu den übrigen Halbbrücken angehoben werden. Auf diese Weise stellen sich ungleiche, asymmetrische Phasenströme I1 bis I3 in den Phasen zwischen dem Stromrichter 1 und der elektrischen Maschine 3 ein. Maßgeblich für das mittlere Drehmoment der elektrischen Maschine 3 ist hierbei der Effektivwert des Phasenstroms bei der zur mechanischen Drehfrequenz passenden elektrischen Grundfrequenz.

Die Temperaturverteilung in dem Stromrichter 1, welche für eine Einstellung einer ungleichen Stromverteilung in den von dem Stromrichter 1 ausgegebenen Phasenströmen I1 bis I3 zugrunde liegt, kann hierbei beispielsweise mittels einem oder mehreren Temperatursensoren 16 ermittelt werden. Beispielsweise kann an jedem der Schaltelemente M1 bis M6 ein entsprechender Temperatursensor 16 vorgesehen sein. Alternativ ist es auch möglich, nur an jeder Halbbrücke 11, 12, 13 einen Temperatursensor 16 vorzusehen oder gegebenenfalls auch nur einen einzigen Temperatursensor 16 für den gesamten Stromrichter 1 vorzusehen.

Die detaillierte Temperaturverteilung in dem Stromrichter 1 kann neben der sensorisch erfassten Temperatur durch den Temperatursensor 16 auch zusätzlich oder gegebenenfalls vollständig mittels eines Rechenmodells ermittelt werden. Hierzu kann dieses Rechenmodell beispielsweise theoretisch berechnete oder messtechnisch erfasste Werte von elektrischen Strömen, beispielsweise den Phasenströmen I1 bis I3 zwischen dem Stromrichter 1 und der elektrischen Maschine 3 berücksichtigen. Darüber hinaus können auch weitere Parameter, wie beispielsweise eine aktuell eingestellte Kühlleistung eines mit dem Stromrichter 1 gekoppelten Kühlsystems, eine Kühlmitteltemperatur oder weitere Parameter berücksichtigt werden.

Auf Grundlage der gemessenen oder berechneten Temperaturverteilung in dem Stromrichter 1 können daraufhin geeignete Werte für die Phasenströme I1, I2 und I3 berechnet werden. Insbesondere können hierbei für die Phasenströme I1, I2 und I3 Werte berechnet werden, welche eine möglichst gleichmäßige Temperaturverteilung in dem Stromrichter 1 hervorrufen. Gegebenenfalls können auch Vorgaben für die Phasenströme I1, I2 und I3 berechnet werden, welche eines oder mehrere der Schaltelemente M1 bis M6 weniger stark belasten als andere Schaltelemente M1 bis M6, um somit diese Schaltelemente M1 bis M6 zu schonen. Insbesondere kann hierbei gegebenenfalls eine berechnete oder messtechnisch erfasste Alterung einzelner Schaltelemente M1 bis M6 berücksichtigt werden.

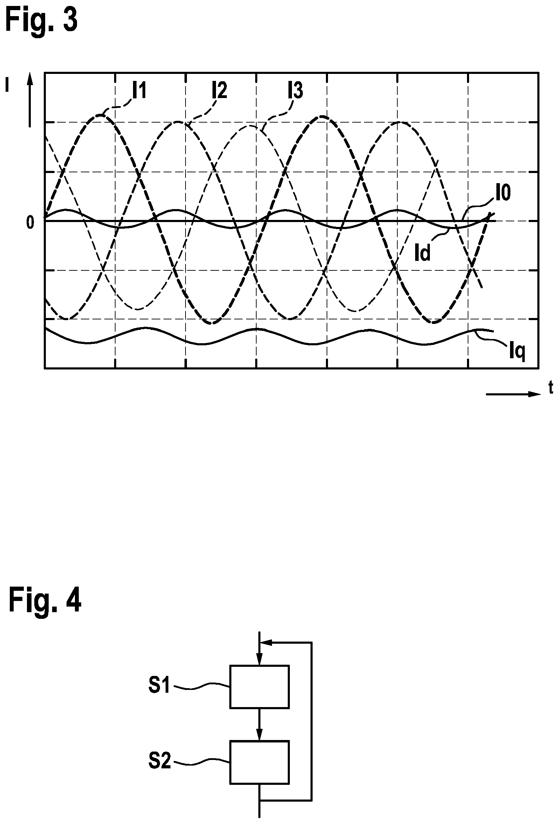

Figur 3 zeigt eine schematische Darstellung eines Strom-Zeitdiagramms mit einer ungleichen Verteilung der Phasenströme I1 bis I3, wie sie in einer Ansteuerung gemäß einer Ausführungsform zugrunde liegen. Wie hierbei zu erkennen ist, ist der Phasenstrom I3 gegenüber den anderen Phasenströmen I1 und I2 abgesenkt, während der Phasenstrom I1 gegenüber den anderen beiden Phasenströmen I2 und I3 erhöht ist. Auf diese Weise können die Schaltelemente M3 und M6 für den dritten Phasenstrom I3 weniger stark belastet werden. Insbesondere kann hierdurch gegebenenfalls ein weiterer Temperaturanstieg in der dritten Halbbrücke 13 verhindert oder zumindest minimiert werden. In einem entsprechenden d-q-System werden die konstanten Ströme der d-Komponente und der q-Komponente mit einem Strom der zweiten harmonischen Oberschwingung und geeigneter Phasenverschiebung überlagert. Eine derartige Überlagerung der Grundfrequenz der Phasenströme in einem d-q-System mit der zweiten harmonischen Oberschwingung zur Anpassung der Phasenströme I1 bis I3 bewirkt im Wesentlichen einen Rippel im Drehmoment, wobei sich hierbei keine bzw. nur sehr geringe Auswirkungen auf das mittlere Moment der elektrischen Maschine 3 ergeben. Gegebenenfalls kann der auftretende Rippel durch Aufmodulieren weiterer Oberschwingungen beispielsweise der sechste harmonischen Oberschwingung im d-q-System minimiert werden. Die genannten Oberschwingungen betreffen hierbei die Oberschwingungen in bei einer Regelung in einem d-q-System. In einem u-v-w-System verschieben sich gemäß der Parktransformation die Oberschwingungen auf die entsprechenden Seitenbänder. Beispielsweise entspricht eine Überlagerung der zweiten harmonischen Oberschwingung im d-q-System einer Überlagerung der dritten harmonischen Oberschwingung im u-v-w-System. Analog entspricht beispielsweise eine Überlagerung der sechsten harmonischen Oberschwingung im d-q-System einer Überlagerung der siebten harmonischen Oberschwingung im u-v-w-System

Die asymmetrische Einstellung der Phasenströme I1 bis I3 führt, wie zuvor beschrieben, zu einem Rippel im Drehmoment, und somit gegebenenfalls zu einer entsprechenden Geräuschentwicklung. Diese Geräuschentwicklung kann gegebenenfalls von einem Benutzer wahrgenommen werden und unter Umständen zu Irritationen führen. Um diese Irritationen zu minimieren, kann die Variation in den Amplituden der Phasenströme I1 bis I3 nicht sprunghaft ausgeführt werden. Vielmehr kann die individuelle Anpassung der einzelnen Phasenströme I1 bis I3 kontinuierlich, insbesondere mit einer vorgegebenen Zeitkonstante bis zu dem gewünschten Endwert angepasst werden. Auf diese Weise wird sich auch nur eine allmähliche Veränderung in der Geräuschentwicklung der elektrischen Maschine bemerkbar machen. Diese allmähliche Änderung der Geräuschentwicklung wird durch einen Benutzer weniger dramatisch wahrgenommen und führt somit zu geringeren Irritationen.

Figur 4 zeigt eine schematische Darstellung eines Ablaufdiagramms, wie es einem Verfahren zur Ansteuerung eines mehrphasigen Stromrichters 1 gemäß einer Ausführungsform zugrunde liegt. In Schritt S1 wird eine Temperaturverteilung in dem Stromrichter 1 ermittelt. Die Ermittlung dieser Temperaturverteilung mittels Sensorwerten und/oder einem Rechenmodell wurde zuvor bereits ausführlich beschrieben. In Schritt S2 erfolgt mit der ermittelten Temperaturverteilung ein Einstellen von vorbestimmten Phasenströmen I1 bis I3 in dem Stromrichter 1. Hierbei kann für jede Phase des Stromrichters 1 ein individueller Phasenstrom I1 bis I3 eingestellt werden. Das Einstellen der Phasenströme I1 bis I3 kann beispielsweise mittels einer Regelung in einem d-q-System erfolgen. Hierbei kann insbesondere eine Grundfrequenz mit mindestens einer weiteren harmonischen Oberschwingung des Phasenstroms überlagert werden. Bei den zu überlagernden Oberschwingungen kann es sich beispielsweise im d-q-System um die zweite harmonische Oberschwingung handeln. Gegebenenfalls kann auch weiterhin eine sechste harmonische Oberschwingung des Phasenstroms überlagert werden. Das Überlagern weiterer harmonischer Oberschwingungen ist darüber hinaus ebenso möglich.

Um gegebenenfalls einer unterschiedlichen Temperaturverteilung in den oberen Schaltelementen M1 bis M3 und den unteren Schaltelementen M4 bis M6 entgegenzuwirken, kann auch eine asymmetrische Einstellung der Phasenströme mit einem vorgegebenen Offset eingestellt werden.

Zusammenfassend betrifft die vorliegende Erfindung die Ansteuerung eines mehrphasigen Stromrichters für eine Anpassung der Temperaturverteilung in dem Stromrichter. Hierzu ist es vorgesehen, die Phasenströme in den einzelnen Phasen auf der Ausgangsseite des Stromrichters mit einer unterschiedlichen Amplitude einzustellen. Entsprechend werden die jeweiligen Halbbrücken in dem Stromrichter unterschiedlich stark belastet. Auf diese Weise kann eine ungleichmäßige Temperaturverteilung in dem Stromrichter kompensiert werden. Alternativ kann auch gezielt eine ungleichmäßige Temperaturverteilung in dem Stromrichter eingestellt werden, um weiteren Rahmenbedingungen Rechnung zu tragen.

## Patentansprüche

1. Verfahren zur Ansteuerung eines mehrphasigen Stromrichters (1), mit den Schritten:
Ermitteln (S1) einer Temperaturverteilung in dem Stromrichter (1); und
Einstellen (S2) von vorbestimmten Phasenströmen (I1..I3) in dem Stromrichter (1) in Abhängigkeit von der ermittelten Temperaturverteilung in dem Stromrichter (1),
wobei für jede Phase des Stromrichters (1) ein individueller Phasenstrom (I1..I3) eingestellt wird,
**dadurch gekennzeichnet,**
**dass** die Amplituden einzelner Phasenströme gegenüber den anderen Phasenströmen angehoben oder abgesenkt werden.

2. Verfahren nach Anspruch 1, wobei das Einstellen (S2) von vorbestimmten Phasenströmen (I1..I3) in dem Stromrichter (1) ein Überlagern einer Grundfrequenz mit mindestens einer weiteren harmonischen Oberschwingung eines vorbestimmten Phasenstroms (I1..I3) umfasst.

3. Verfahren nach Anspruch 2, wobei die mindestens eine weitere harmonische Oberschwingung mindestens die zweite harmonische Oberschwingung der Grundfrequenz des Phasenstroms (I1..I3) in einem d-q-System umfasst.

4. Verfahren nach Anspruch 3, wobei die weitere harmonische Oberschwingung ferner mindestens die sechste harmonische Oberschwingung der Grundfrequenz des Phasenstroms (I1..I3) in einem d-q-System umfasst

5. Verfahren nach einem der Ansprüche 1 bis 4, wobei das Einstellen von vorbestimmten Phasenströmen (I1..I3) in dem Stromrichter (1) ein Anpassen der Phasenströme (I1..I3) mit einer vorbestimmten Zeitkonstante umfasst.

6. Verfahren nach einem der Ansprüche 1 bis 5, wobei das Einstellen (S2) von vorbestimmten Phasenströmen (I1..I3) in dem Stromrichter (1) ein Überlagern der Phasenströme (I1..I3) mit einem vorgegebenen Offset umfasst.

7. Steuervorrichtung (15) für einen mehrphasigen Stromrichter (1), mit:
Einer Auswerteeinrichtung, die dazu ausgelegt ist, eine Temperaturverteilung in dem Stromrichter (1) zu ermitteln;
Einer Steuereinrichtung, die dazu ausgelegt ist, in Abhängigkeit von der ermittelten Temperaturverteilung in dem Stromrichter (1) vorbestimmte Phasenströmen (I1..I3) für den Stromrichter (1) zu berechnen und einem Stromrichter (1) eine Steuergröße zum Einstellen der berechneten Phasenströmen in dem Stromrichter (1) bereitzustellen, **dadurch gekennzeichnet, dass** die Steuereinrichtung dazu ausgelegt ist, für jede Phase des Stromrichters (1) einen individuellen Phasenstrom zu berechnen,
wobei die Amplituden einzelner Phasenströme gegenüber den anderen Phasenströmen angehoben oder abgesenkt werden.

8. Steuervorrichtung (15) nach Anspruch 7, wobei die Auswerteeinrichtung dazu ausgelegt ist, die Temperaturverteilung in dem Stromrichter (1) in Abhängigkeit von mindestens einem sensorisch erfassten Temperaturwert zu ermitteln.

9. Steuervorrichtung (15) nach Anspruch 7 oder 8, wobei die Auswerteeinrichtung dazu ausgelegt ist, die Temperaturverteilung in dem Stromrichter (1) mittels eines Rechenmodells zu ermitteln.

10. Stromrichter (1), mit:
Mehreren Halbbrücken (11, 12, 13) mit einem oberen Schaltelement (M1..M3) und einem unteren Schaltelement (M4..M6), wobei jede Halbbrücke (11, 12, 13) dazu ausgelegt ist, einen vorgegebenen Phasenstrom (I1..I3) auszugeben; und einer Steuervorrichtung (15) nach einem der Ansprüche 7 bis 9.

## Claims

1. Method for driving a multiphase rectifier (1), having the steps of:
determining (S1) a temperature distribution in the rectifier (1); and
setting (S2) predetermined phase currents (II..13) in the rectifier (1) depending on the determined temperature distribution in the rectifier (1),
wherein an individual phase current (I1..I3) is set for each phase of the rectifier (1),
**characterized**
**in that** the amplitudes of individual phase currents are raised or lowered in relation to the other phase currents.

2. Method according to Claim 1, wherein setting (S2) predetermined phase currents (I1..I3) in the rectifier (1) comprises overlaying a fundamental frequency with at least one further harmonic of a predetermined phase current (I1..I3).

3. Method according to Claim 2, wherein the at least one further harmonic comprises at least the second harmonic of the fundamental frequency of the phase current (I1..I3) in a d-q system.

4. Method according to Claim 3, wherein the further harmonic furthermore comprises at least the sixth harmonic of the fundamental frequency of the phase current (I1..I3) in a d-q system.

5. Method according to one of Claims 1 to 4, wherein setting predetermined phase currents (I1..I3) in the rectifier (1) comprises adjusting the phase currents (II..13) with a predetermined time constant.

6. Method according to one of Claims 1 to 5, wherein setting (S2) predetermined phase currents (I1..I3) in the rectifier (1) comprises overlaying the phase currents (I1..I3) with a predefined offset.

7. Control device (15) for a multiphase rectifier (1), having:
an evaluation apparatus that is designed to determine a temperature distribution in the rectifier (1);
a control apparatus that is designed to calculate predetermined phase currents (I1..I3) for the rectifier (1) depending on the determined temperature distribution in the rectifier (1) and to provide a control variable for setting the calculated phase currents in a rectifier (1) to the rectifier (1), **characterized in that** the control apparatus is designed to calculate an individual phase current for each phase of the rectifier (1), wherein the amplitudes of individual phase currents are raised or lowered in relation to the other phase currents.

8. Control device (15) according to Claim 7, wherein the evaluation apparatus is designed to determine the temperature distribution in the rectifier (1) depending on at least one temperature value recorded by way of sensors.

9. Control device (15) according to Claim 7 or 8, wherein the evaluation apparatus is designed to determine the temperature distribution in the rectifier (1) by way of a computational model.

10. Rectifier (1), having:
a plurality of half-bridges (11, 12, 13) having an upper switching element (M1..M3) and a lower switching element (M4..M6), wherein each half-bridge (11, 12, 13) is designed to output a predefined phase current (I1..I3); and
a control device (15) according to one of Claims 7 to 9.

## Revendications

1. Procédé permettant de piloter un convertisseur de puissance polyphasé (1), comprenant les étapes consistant à :
établir (S1) une distribution de température dans le convertisseur de puissance (1) ; et
régler (S2) des courants de phase prédéterminés (I1 ... I3) dans le convertisseur de puissance (1) en fonction de la distribution de température établie dans le convertisseur de puissance (1),
un courant de phase individuel (I1 ... I3) étant réglé pour chaque phase du convertisseur de puissance (1),
**caractérisé en ce que** les amplitudes de courants de phase individuels sont augmentées ou réduites par rapport aux autres courants de phase.

2. Procédé selon la revendication 1, dans lequel le réglage (S2) de courants de phase prédéterminés (I1... I3) dans le convertisseur de puissance (1) comprend une superposition d'une fréquence fondamentale avec une autre oscillation harmonique d'un courant de phase prédéterminé (I1...I3).

3. Procédé selon la revendication 2, dans lequel ladite au moins une autre oscillation harmonique comprend au moins la deuxième oscillation harmonique de la fréquence fondamentale du courant de phase (I1...I3) dans un système dq.

4. Procédé selon la revendication 3, dans lequel l'autre oscillation harmonique comprend en outre au moins la sixième oscillation harmonique de la fréquence fondamentale du courant de phase (I1...I3) dans un système dq.

5. Procédé selon l'une quelconque des revendications 1 à 4, dans lequel le réglage de courants de phase prédéterminés (I1...I3) dans le convertisseur de puissance (1) comprend une adaptation des courants de phase (I1...I3) par une constante de temps prédéterminée.

6. Procédé selon l'une quelconque des revendications 1 à 5, dans lequel le réglage (S2) de courants de phase prédéterminés (I1...I3) dans le convertisseur de puissance (1) comprend une superposition des courants de phase (I1...I3) avec un décalage prédéfini.

7. Dispositif de commande (15) pour un convertisseur de puissance (1) polyphasé, comprenant :
un équipement d'évaluation qui est conçu pour établir une distribution de température dans le convertisseur de puissance (1) ;
un équipement de commande qui est conçu pour calculer, en fonction de la distribution de température établie dans le convertisseur de puissance (1), des courants de phase prédéterminés (I1...I3) pour le convertisseur de puissance (1) et pour fournir à un convertisseur de puissance (1) une grandeur de commande pour régler les courants de phase calculés dans le convertisseur de puissance (1),
**caractérisé en ce que** l'équipement de commande est conçu pour calculer un courant de phase individuel pour chaque phase du convertisseur de puissance (1), les amplitudes de courants de phase individuels étant augmentées ou réduites par rapport aux autres courants de phase.

8. Dispositif de commande (15) selon la revendication 7, dans lequel l'équipement d'évaluation est conçu pour établir la distribution de température dans le convertisseur de puissance (1) en fonction d'au moins une valeur de température détectée par capteur.

9. Dispositif de commande (15) selon la revendication 7 ou 8, dans lequel l'équipement d'évaluation est conçu pour établir la distribution de température dans le convertisseur de puissance (1) au moyen d'un modèle mathématique.

10. Convertisseur de puissance (1), comprenant :
plusieurs demi-ponts (11, 12, 13) dotés d'un élément de commutation supérieur (M1...M3) et d'un élément de commutation inférieur (M4 ... M6), chaque demi-pont (11, 12, 13) étant conçu pour sortir un courant de phase prédéfini (I1...I3) ; et
un dispositif de commande (15) selon l'une quelconque des revendications 7 à 9.
